# EUROPEAN PATENT APPLICATION

(11) **EP 1 933 328 A2**
(43) Date of publication of application: **18.06.2008**
(21) Application number: 07122212.9
(22) Date of filing: 04.12.2007
(51) Int. Cl.: G21C 3/32

(54) **Surface laser treatment of zr-alloy fuel bundle material**

(30) Priority: 15.12.2006 US 611348
(71) Applicant: Global Nuclear Fuel-Americas, LLC, Wilmington, North Carolina 28402 (US)
(72) Inventor: Lutz, Daniel Reese, San Jose, CA 95125 (US); Lin, Yang-Pi, Wilmington, NC 28405 (US); Potts, Gerald Allen, Wilmington, NC 28412 (US); Jackson, William H., Castle Hayne, NC 28429 (US)
(74) Representative: Szary, Anne Catherine

(57) **Abstract**

A method for treating a Zr-alloy fuel bundle material in a nuclear reactor includes treating a surface of the Zr-alloy fuel bundle material with a laser beam generated by a solid-state laser, and a nuclear reactor including a treated Zr-alloy fuel bundle material (14). This may reduce the generation of shadow corrosion and/or reduce the propensity for interference between control blade (12) and flow channel during operation of the nuclear reactor.

## Description

The present invention generally relates to a nuclear boiling water reactor (BWR) and more specifically to treating the surface of a zirconium-alloy (Zr-alloy) fuel bundle material.

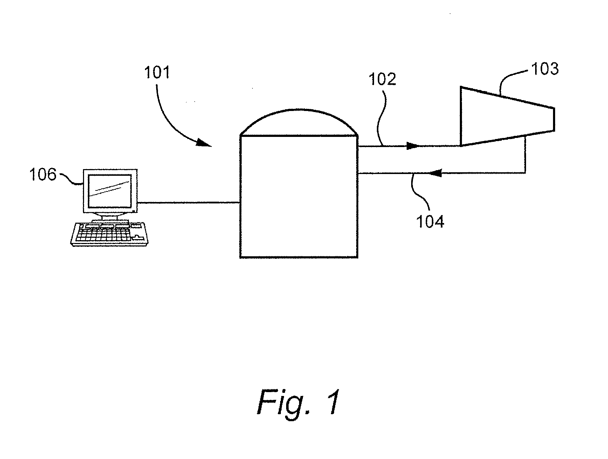

BWRs generate power from a controlled nuclear fission reaction. As shown in Figure 1, a simplified BWR includes a reactor chamber 101 that contains a nuclear fuel core and water. Generated steam is transferred through pipe 102 to turbine 103, where electric power is generated, and the water returns to the core through pipe 104. A control computer 106 may control the operation of the BWR and particularly its core.

In the BWR core, fuel rod bundles are encased in thin rectangular fuel channels. A fuel channel may be embodied as a hollow box within which are arranged the fuel rod bundles. A particular problem with fuel channels is that they can deform. They may deform due to various nuclear and mechanical responses in the core of an operating BWR. Deformations may be partially affected by plant operation strategy. The nuclear and mechanical responses are complex and spread out over time. For example, the operation of a channel (the "cause") may result in channel deformation (the "effect") observed later in the residence time of the channel in the core.

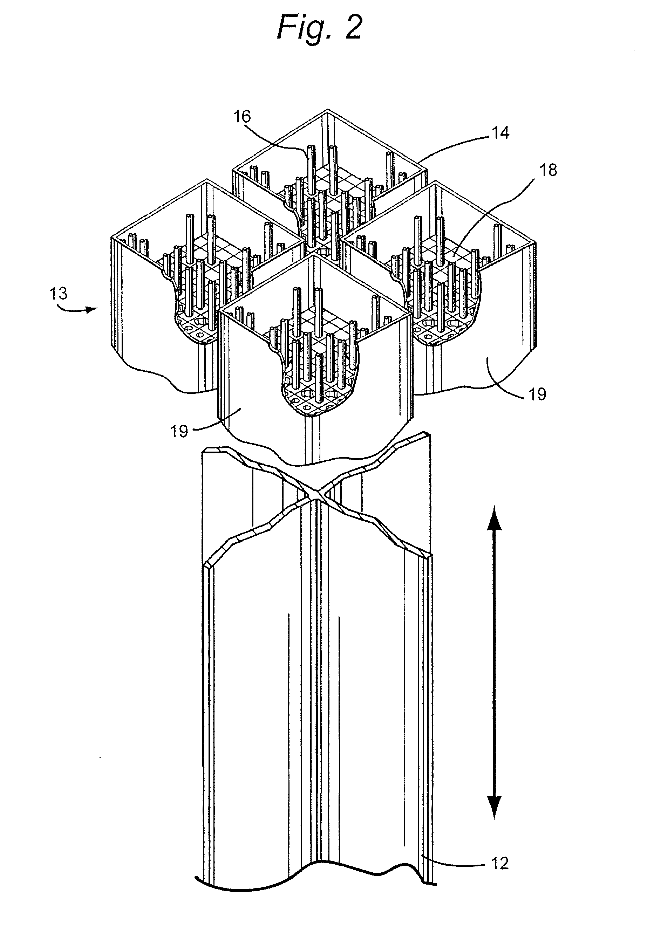

Figure 2 schematically illustrates a control blade 12 and an associated fuel assembly, generally designated 13, comprised of four fuel bundles 14. The fuel bundles 14 are only partially illustrated with each bundle having fuel rods 16, e.g., in a 10x10 array, and associated vertically spaced spacers 18 as is conventional, only one spacer 18 being illustrated in each fuel bundle 14. Fuel channels 19 surround each fuel bundle 14 and define a cruciform opening between the fuel assemblies. As will be appreciated, control blade 12 is cruciform in cross-section and is generally receivable within the core of the nuclear reactor in the cruciform openings between the four fuel bundles 14, the blades being movable from below the fuel assemblies, i.e., withdrawn positions, to positions within the cruciform openings adjacent the fuel assemblies.

Interference between a fuel bundle channel and a control blade may be caused by bowing of Zircaloy (i.e., a zirconium-based alloy) flow channels due to side-side differences in channel hydrogen content. These differences may be caused by localized "shadow" corrosion, which may be caused by being in close proximity to stainless steel control blade on 2 of 4 channel sides. Irradiation growth - a common, well-known phenomenon that may be caused by exposure to differential neutron radiation gradients - may magnify and exacerbate the problem.

The possible problem of shadow corrosion of Zr-based alloys has generally not been addressed adequately. There has been some work showing that an insulating coating on the non-Zr alloy component and modified blade materials may be effective in mitigation. Conceptually, beta absorbing coatings on the control blade and low Manganese (Mn) content materials have been proposed as solutions. Conventional methods to improve the uniform or nodular corrosion resistance through alloy composition control and metallurgical control through conventional heat treatment have generally not been effective in mitigating shadow corrosion, which appears to occur via a different mechanism. Likewise, extensive research related to hydrogen absorption into Zr-based alloys as a result of corrosion during operation in an light water reactor (LWR) may not have provided an entirely effective means of mitigating hydrogen absorption.

Shadow corrosion may occur on Zircaloy fuel rods near Inconel (or other nickel-based superalloy) parts of a fuel bundle spacer - the spacer could be Zircaloy with Inconel springs or entirely Inconel - that contact the fuel rods. In severe instances the corrosion may even cause a fuel failure.

At the present time, a laser bar code can be applied to each fuel rod in order to facilitate the identification and tracking of each fuel rod. This laser bar code may be applied to the full circumference of each fuel rod within a 3-inch band at one location. The bar code may generally consist of a series of discrete lines of thick and thin lines with spacing in between adjacent lines. To place this bar code onto each fuel rod, a narrow laser beam is typically used to create discrete, narrow lines. These bar codes, however, may not be substantially continuous (they are typically discrete), are generally only placed in close proximity to the spacer on part length fuel rods, and have generally not been placed on fuel channels.

### BRIEF DESCRIPTION OF THE INVENTION

In an embodiment, the present invention generally relates to a method for treating a Zr-alloy fuel bundle material in a nuclear reactor. In an embodiment, the method includes treating a surface of the Zr-alloy fuel bundle material with a laser beam generated by a solid-state laser.

In another embodiment, the present invention generally relates to a nuclear boiling water reactor that has a reactor chamber including a nuclear fuel core and water for generating steam and a turbine for generating electric power. In an embodiment, the reactor chamber includes a fuel rod bundle, which includes a fuel rod and a spacer. In an embodiment, the fuel rod bundle is made from a Zr-alloy whose surface has been subjected to a treatment by a laser beam generated by a YAG-based solid-state laser. In an embodiment, the treatment created a surface layer in the fuel rod bundle.

### BRIEF DESCRIPTION OF THE DRAWINGS

Figure 1 illustrates a simplified BWR including a reactor chamber that contains a nuclear fuel core and water; and
Figure 2 illustrates an exemplary perspective view of a control rod and four fuel bundles with the control rod aligned with the cruciform openings between the fuel bundles.
Figure 3 illustrates an exemplary side-view of a Zr-alloy being treated with a solid-state laser.
Figure 4 illustrates a test specimen treated with a solid-state laser in accordance with an exemplary embodiment.

### DETAILED DESCRIPTION OF THE INVENTION

Embodiments of the present invention provide a method whereby the surface of the Zr-alloy fuel bundle material potentially susceptible to shadow corrosion is treated with a laser beam. This may reduce the propensity for shadow corrosion. If the Zr-alloy treated surface is a fuel channel placed in close proximity to a control blade, the likelihood of interference between the channel and control blade may be reduced. This, in turn, may improve the safe operation of the boiling water reactor. If the Zr-alloy treated surface is a fuel cladding placed in close proximity to a dissimilar fuel spacer material, the likelihood of enhanced spacer shadow corrosion and subsequent fuel failure may be reduced. The Zr-alloy may be, for example, Zircaloy-2, Zircaloy-4, or a niobium-containing Zr-alloy (such as a Zr-alloy containing 1-2% niobium (Nb)).

According to an embodiment of the present invention, a laser beam may be used to treat substantially the entire continuous outer surface of the fuel channel material made from Zr-alloy. Alternatively, in another embodiment, a discontinuous surface of the fuel channel material is treated. A continuous, non-discrete treatment may be performed using a laser beam broad enough to cover and treat the entire surface in one pass per channel side, although a series of multiple adjacent and/or overlapping passes may also be suitable. For example, in certain embodiments, 10 or fewer passes may be utilized to treat the substantially continuous surface. Even more preferably, 5 or fewer passes may be utilized.

The laser beam treatment may be performed during various stages of fabrication. According to an embodiment, the treatment may be performed during the early stages of fabrication. According to other embodiments, the treatment may be performed after the channel has been formed into a box, after it has been thermal size annealed, and/or after completion of substantially all surface grit blasting, etching, and polishing.

In one embodiment, a laser beam treats or conditions at least a portion of the outer surface of the fuel cladding in a continuous or substantially continuous manner. The laser beam may treat either the entire outer surface or a more localized region, preferably one that is in close proximity to dissimilar spacer materials during operation of the nuclear reactor. A broad laser beam is preferably used to cover and treat the region of interest in a single pass or multiple passes. It should be noted that a narrow laser beam may be used, even if possibly necessitating a large number of passes before the entire region of interest is treated.

Although the precise mechanism by which the laser treatment may mitigate shadow corrosion is not 6 fully known, it is believed that either (i) the local surface microstructure may be altered by the laser treatment (such as forming a beta quenched surface structure, altering the intermetallic particle size, or supersaturating the matrix with alloying elements that may normally have a low solubility) or (ii) the laser treatment may create a thin oxide layer that may reduce the rate of the electromechanical corrosion reaction that may occur in operation. Nevertheless, the operation of the present invention does not depend upon knowledge or recognition of the precise mechanism by which shadow corrosion may be mitigated.

In some embodiments, the present invention may have a broader use than merely mitigating channel bowing. The laser treatment may also be applied to the outer surface of Zr-alloy fuel cladding to prevent shadow corrosion that may be caused by dissimilar metals (such as Inconel, for instance) used as spacers and/or spacer springs. Under susceptible conditions, enhanced spacer shadow corrosion may cause fuel cladding failures. In some embodiments, the present invention may prevent or at least reduce the likelihood of fuel failures.

Extant laser beams may be used in certain embodiments of the present invention. The characteristics of the laser beam - including the power of the laser beam, its wavelength, its width, its speed, its depth of penetration into the Zr-alloy, the preferred temperature range of the Zr-alloy during treatment, the environment (e.g., composition of the atmosphere (such as air, argon, or other gasses), temperature, pressure, etc.) that the laser treatment is performed in, the cooling rate of the Zr-alloy material, etc. - may be varied according to and as required by operational conditions.

Solid-state lasers may be used, including, for example, yttrium aluminum garnet-based (YAG-based) solid-state lasers. In YAG-based solid-state lasers, YAG may be doped with various elements or combinations of elements, including, for example, cerium(III) (Ce:YAG or YAG:Ce), chromium(IV) (Cr:YAG), dysprosium (Dy:YAG), erbium (Er:YAG), holmium (Ho:YAG), neodymium (Nd:YAG), samarium YAG (Sm:YAG), terbium (Tb:YAG), thulium (Tm:YAG), ytterbium (Yb:YAG), neodymium-cerium (Nd:Ce:YAG or Nd,Ce:YAG), holmium-chromium-thulium (Ho:Cr:Tm:YAG, or Ho,Cr,Tm:YAG). Other solid-state lasers may also be used, including, ruby solid-state lasers, glass-based solid-state lasers (such as neodymium glass (Nd:glass), ytterbium-doped glass, promethium 147 doped phosphate glass (¹⁴⁷Pm⁺³:Glass), and erbium-doped and erbium-ytterbium codoped glass lasers), sapphire-based solid-state lasers (such as titanium-doped sapphire), neodymium YLF (Nd:YLF) solid-state laser, neodymium-doped YVO4 (Nd:YVO) solid-state laser, neodymium-doped yttrium calcium oxoborate (Nd:YCa4O(BO3)3 or Nd:YCOB), cerium-doped lithium strontium (or calcium) aluminum fluoride (Ce:LiSAF or Ce:LiCAF), chromium-doped chrysoberyl (alexandrite) solid-state laser, and other solid-state lasers. The solid-state lasers may be pulsed, continuous wave, or quasi-continuous wave.

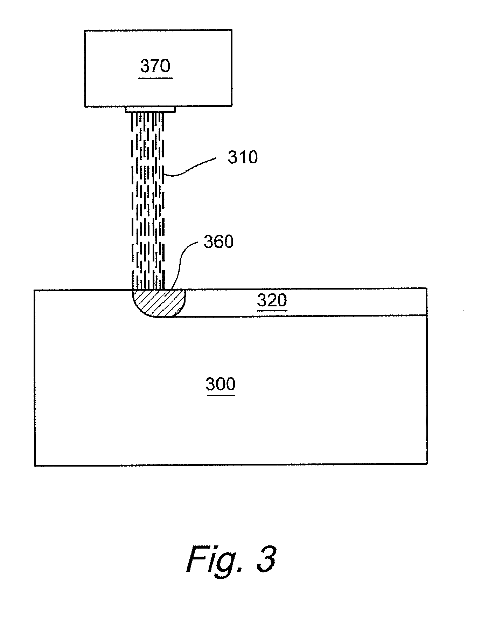

Figure 3 illustrates a side-view of Zr-alloy 300 being treated with laser beam 310 generated by solid-state laser 370. As laser beam 310 moves from right to left in this exemplary illustration, it interacts with Zr-alloy 300 at location 360 and creates a layer 320. Layer 320 may, for example, be an altered microstructural surface layer or, alternatively or conjunctively, a surface oxide layer. If comprising a surface oxide layer, the thickness of layer 320 is preferably less than 25 micrometers, more preferably less than 20 micrometers, even more preferably less than 15 micrometers, even more preferably less than 10 micrometers, and most preferably less than 5 micrometers.

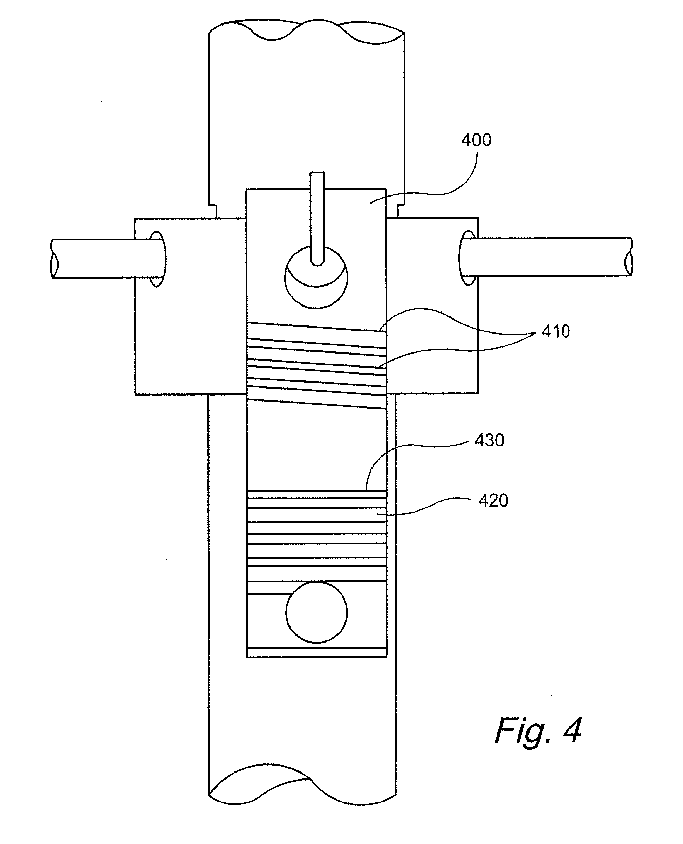

An example of a laser beam treated prototype test specimen is illustrated in Figure 4. The specimen 400 was prepared from a flat Zircaloy-2 channel strip that was fabricated by a series of steps that are well-known to those skilled in the art. The strip fabrication steps included ingot melting, forging, and hot and cold rolling, a single intermediate beta quench, and multiple intermediate recrystallization anneals. A small portion of the strip was then machined from the strip to form test specimen 400. The small test specimen was then subjected to multiple, narrow, adjacent laser strikes 410 across the width of the test specimen which created a thin oxide layer and/or an altered microstructural surface layer corresponding to the position of the laser strikes. The laser strikes varied in size, such as thick strike 420 and thin strike 430.

The laser strikes 410 were formed in air using a Lightwriter laser manufactured by Lumonics. The laser was a low power YAG-type rated at 25W. This is a continuous (as opposed to a pulsed) type laser and the barcode pattern (a code 39 barcode, which is well-known method of generating symbolic representations of alphanumeric characters) was generated through optics (i.e., rotating mirror, etc. rather than pulsing the laser or controlling beam shape). The laser is typically run at 80-85% of the rated power. The work piece is located at 8 inches from the YAG laser and it takes 7.5 seconds to make the 2-inch long bar code.

The test specimen was then placed into the core of a test reactor that simulated a commercial LWR aqueous reactor core environment. The test specimen was then extracted from the core and examined visually as indicated in Figure 4. The laser strikes are observed as a bright linear mark in the central portion of the specimen against the light brownish background of the untreated portion of the test specimen.

Some embodiments of the present invention may reduce shadow corrosion and may reduce the propensity for bowing interference between stainless steel control blade and Zr-based flow channel in a LWR. This interference may reduce a plant's safety margin and may lower plant efficiency when the cause is related to shadow corrosion. Factors that may cause the interference may include a differential hydrogen content that may be caused by differential shadow corrosion that may occur when the control blade is inserted and is in close proximity to the square channel on 2 of 4 sides, perhaps in combination with the well-known phenomenon of irradiation growth. Similar situations may develop when a dissimilar metal, such as an stainless steel instrument tube, is placed close to one corner of a Zr-alloy channel.

It should be understood that all numbers and ranges disclosed and claimed herein are approximate.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method for treating a Zr-alloy fuel bundle material 300) for use in a nuclear reactor (101) comprising the Zr-alloy fuel bundle material (300), the method comprising the step of treating a surface of the Zr-alloy fuel bundle material (300) with a laser beam (310) generated by a solid-state laser.

2. The method of claim 1, wherein the step of treating the surface of the Zr-alloy fuel bundle material (300) occurs in 5 or fewer passes.

3. The method of claim 1 or claim 2, wherein the surface of the Zr-alloy fuel bundle material (300) comprises a localized region located in close proximity to a spacer (18) during operation of the nuclear reactor (101).

4. The method of any preceding claim, wherein the step of treating the surface of the Zr-alloy fuel bundle material (300) causes a reduction in a generation of shadow corrosion occurring during operation of the nuclear reactor (101).

5. The method of any preceding claim, wherein the step of treating the surface of the Zr-alloy fuel bundle material (300) causes a reduction of interference between a control blade (12) and a flow channel (19) occurring during operation of the nuclear reactor (101).

6. The method of any preceding claim, wherein the step of treating the surface of the Zr-alloy fuel bundle material (300) creates a layer (320) comprising an altered microstructural surface layer.

7. The method of any preceding claim, wherein the step of treating the surface of the Zr-alloy fuel bundle material (300) creates a layer (320) comprising a surface oxide layer.

8. The method of claim 7, wherein the surface oxide layer has a thickness less than 15 micrometers.

9. The method of any preceding claim, wherein the solid-state laser comprises a YAG-based solid-state laser.

10. A nuclear boiling water reactor comprising:
a reactor chamber (101) comprising a nuclear fuel core and water for generating steam; and
a turbine (103) for generating electric power;
wherein the reactor chamber (101) comprises a fuel rod bundle (14) comprising a fuel rod (16) and a spacer (18);
wherein the fuel rod bundle (14) comprises Zr-alloy; and
wherein a surface of the fuel rod bundle (14) was subjected to a treatment by a laser beam (310) generated by a YAG-based solid-state laser; and
wherein the treatment created a surface layer (320) in the fuel rod bundle.
